# FASCICULE DE BREVET EUROPEEN

(11) **EP 2 077 068 B1**
(45) Date de publication et mention de la délivrance du brevet: **02.03.2011**
(21) Numéro de dépôt: 08291251.0
(22) Date de dépôt: 30.12.2008
(51) Int. Cl.: A01G 9/02, A01G 27/00

(54) **Dispositif pour la culture de vegetaux**
Vorrichtung zur Pflanzenkultivierung
Device for growing plants

(30) Priorité: 04.01.2008 FR 0800033
(43) Date de publication de la demande: 08.07.2009
(73) Titulaire: Morando, Patrick, 06100 Nice (FR)
(72) Inventeur: Morando, Patrick, 06100 Nice (FR)

(56) Documents cités:
- EP-A- 0 461 813
- DE-U1- 8 808 877
- DE-U1- 9 006 988
- US-A- 650 614
- US-A- 4 006 843
- US-A- 5 136 807
- US-B1- 6 622 430

## Description

### DOMAINE DE L'INVENTION

La présente invention concerne un dispositif pour la culture de végétaux, comprenant un bac pour un substrat de croissance d'une plante et une réserve d'eau.

### ARRIERE PLAN DE L'INVENTION

Dans le domaine de la culture des végétaux, il est répandu de proposer des bacs à réserve d'eau destinés à assurer l'alimentation en eau des plantes en l'absence de leur propriétaire.

Ces dispositifs se présentent typiquement sous la forme d'un bac pour contenir le substrat de culture pour la plante, et comprenant un double fond dans lequel est ménagée une réserve d'eau. Ce double fond n'est pas étanche mais présente des ouvertures permettant à l'eau de monter par capillarité dans le substrat pour être absorbée par les racines de la plante.

Toutefois, ce type de réserve présente un volume limité qui correspond à une autonomie de quelques jours, insuffisante en cas d'absence prolongée du propriétaire des plantes (vacances).

Par ailleurs, ce principe présente un inconvénient pour les racines du bas qui sont constamment soumises à une humidité importante, et peut occasionner leur pourrissement et la mort d'une partie de la plante. En outre, ce principe par capillarité est aussi lié à la qualité du substrat, ce qui le rend donc aléatoire.

Au contraire, le mode d'arrosage le plus favorable à une croissance harmonieuse de la plante est un arrosage goutte à goutte permanent sur la surface du substrat, qui permet une répartition homogène de l'eau à travers l'épaisseur de celui-ci et une absorption par les racines sans les exposer à une humidité excessive.

Il existe par ailleurs divers dispositifs qui sont, soit autonomes, soit reliés à un réseau d'eau potable.

Il convient donc de décrire ces deux cas.

Les dispositifs autonomes sont très rudimentaires : ils se présentent par exemple sous la forme d'une bouteille d'eau renversée sur le bac avec un dispositif de capillarité par gravité, ou d'un réservoir d'eau avec des capillaires pour alimenter plusieurs bacs.

Tous ces dispositifs sont inesthétiques, sans possibilité de régulation d'arrosage et limités par leurs dimensions (encombrement)

Il existe d'autre part des dispositifs reliés au réseau d'eau potable avec programmateur et plusieurs capillaires. Toutefois, ces dispositifs présentent plusieurs inconvénients majeurs.

En premier lieu, ils imposent de faire courir un réseau de tubes pour alimenter les différents végétaux.

Ils sont par ailleurs difficiles à installer à l'intérieur d'une habitation, car les tubes apparents sont inesthétiques.

Enfin, il existe des risques majeurs d'inondation en cas de rupture lors de l'absence du propriétaire.

En outre, les bacs proposés dans le commerce présentent une simple paroi qui n'a pas de fonction d'isolation des racines de la plante vis-à-vis des chocs thermiques. En effet les végétaux situés en extérieur sont ainsi particulièrement exposés au gel en hiver et aux brûlures en été, dues notamment à l'action des infra rouge sur les parois du bac, plus particulièrement, comme cela est fréquent, si celles-ci sont de couleur sombre.

Enfin, il est important de rappeler que sur le plan écologique, un végétal dont les besoins en eau fertilisée sont remplis de façon optimale, résiste beaucoup mieux aux agressions des divers parasites et aux chocs physiologiques, et nécessite donc moins de traitements phytosanitaires toxiques pour l'homme.

En outre, un apport régulier en eau au moyen d'un système d'arrosage du type goutte à goutte est considéré par les spécialistes et les professionnels, comme le système le plus économe en eau.

Le document US 2006/0260187 propose un perfectionnement aux dispositifs précités et décrit un bac à double paroi comprenant, entre les deux parois, une réserve d'eau ; ce bac est équipé d'une pompe située à l'extérieur et destinée à amener l'eau de la réserve vers la plante. Toutefois, ce dispositif est particulièrement peu esthétique car tout le système de pompage est apparent ; en outre, la pompe nécessite un module électronique de programmation complexe et coûteux ; enfin, ce système procure un arrosage de la plante par des jets intermittents, qui ne correspond pas au mode d'arrosage optimal.

Un ensemble pour la culture de végétaux selon la préambule de la revendication 1 est divulgué dans le document DE 9006 9884.

L'un des buts de l'invention est donc de remédier à tous les inconvénients des dispositifs précités en proposant un dispositif pour la culture de plantes avec un réservoir d'eau ou de mélange nutritif présentant une plus grande autonomie.

Un autre but de l'invention est de permettre de manière régulière, permanente, simple et économique, un arrosage de la plante plus sain.

Un autre but de l'invention est de procurer une isolation des racines vis-à-vis des chocs thermiques ; enfin, un dernier but de l'invention est de proposer un dispositif esthétique.

### BREVE DESCRIPTION DE L'INVENTION

Conformément à l'invention, il est proposé un ensemble pour la culture de végétaux, comprenant un bac pour un substrat de croissance d'une plante et une réserve d'eau suivant la revendication 1.

De manière préférée, ledit réservoir additionnel est alimenté en eau de la réserve par une pompe.

Selon un mode particulier de réalisation, la pompe est immergée dans la réserve.

Par ailleurs, l'ensemble comprend avantageusement un moyen de commande de la pompe apte à commander le fonctionnement de la pompe à des instants déterminés.

Le moyen d'arrosage comprend de préférence un goutteur, de sorte que la plante est arrosée par un goutte-à-goutte permanent.

L'ensemble comprend préférentiellement un moyen d'indication du niveau de l'eau dans la réserve.

Selon un mode de réalisation préféré de l'invention, l'ensemble comprend un bac principal à double paroi dans lequel :
- le bac pour le substrat est le volume défini par la paroi interne du bac principal, et
- la réserve d'eau est le volume compris entre la paroi interne et la paroi externe du bac principal.

De préférence, la paroi interne est étanche, de sorte que le bac contenant le substrat est étanche vis-à-vis de la réserve d'eau.

De manière particulièrement avantageuse, le bac principal comprend sur sa face externe au moins une peau d'aspect, interchangeable, permettant ainsi d'obtenir un ensemble esthétique modulaire global (la plante et son bac).

Selon une variante de réalisation, le fond du bac principal comprend sur sa face externe des plots et le rebord supérieur du bac principal comprend des logements aptes à recevoir des plots d'un deuxième bac similaire audit bac.

### BREVE DESCRIPTION DES DESSINS

D'autres caractéristiques et avantages de l'invention ressortiront de la description détaillée qui va suivre, en référence aux dessins annexés sur lesquels :
- la figure 1 illustre le principe général de fonctionnement du dispositif de l'invention,
- les figures 2A à 2D illustrent différentes variantes d'agencement du bac contenant la plante et la réserve d'eau,
- la figure 3 illustre un détail de conception du système de remplissage du réservoir additionnel,
- la figure 4 est une vue en perspective d'un dispositif conforme à l'invention,
- la figure 5 est une vue en perspective d'un autre dispositif conforme à l'invention,
- la figure 6 représente deux sections du dispositif,
- la figure 7 est une vue de la nomenclature du dispositif,
- la figure 8 représente deux sections présentant la fixation des peaux d'aspect ;
- les figures 9A et 9B représentent deux coupes d'un mode de réalisation préféré de l'invention.

### DESCRIPTION DETAILLEE DE L'INVENTION

On précise tout d'abord que d'une figure à l'autre, les éléments similaires sont repérés par le même signe de référence.

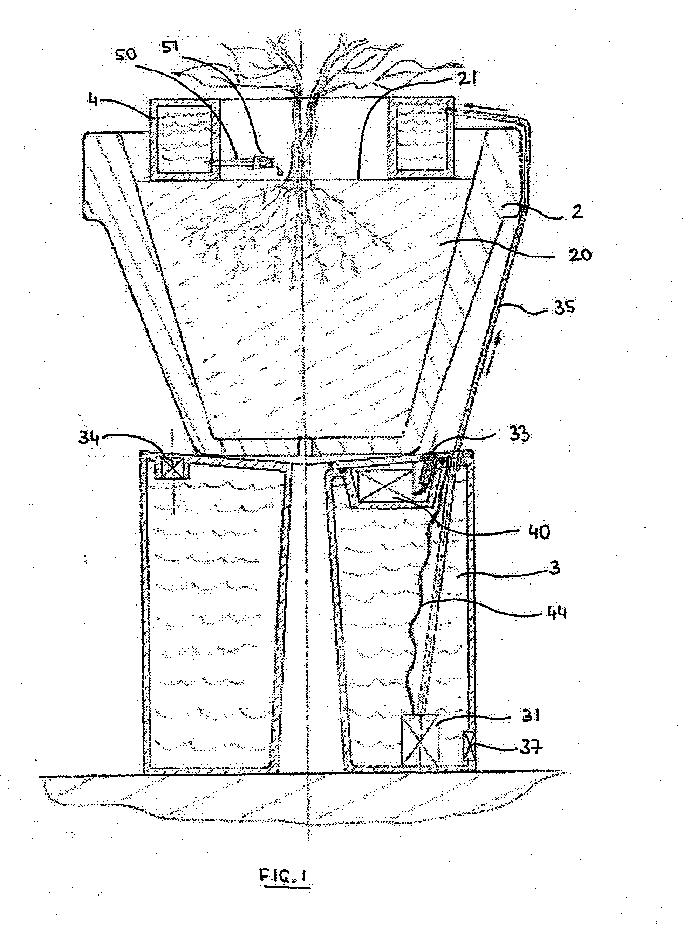

En référence à la figure 1, le dispositif comprend un bac 2 pour le substrat, posé par exemple sur une réserve d'eau 3 dont le volume intérieur est suffisant pour répondre aux besoins en eau de la plante pendant une durée déterminée.

La réserve d'eau 3 comprend un orifice de remplissage muni d'un bouchon 34, et un orifice de vidange 37.

Elle comprend de préférence un moyen 33 d'indication du niveau d'eau, par exemple un témoin lumineux tel qu'une diode électroluminescente (LED) ou un avertisseur sonore.

### Réservoir d'eau additionnel

L'une des originalités de l'ensemble conforme à l'invention est qu'il comprend un réservoir d'eau additionnel 4 situé au-dessus de la surface supérieure 21 du substrat 20.

Ainsi, c'est à partir de ce réservoir additionnel 4 qu'est arrosé le végétal.

Le réservoir additionnel 4 est à cet effet pourvu d'au moins un moyen d'arrosage 5 fonctionnant simplement par gravité.

Le volume du réservoir additionnel est par exemple compris entre un demi-litre et deux litres.

Selon un mode préféré de réalisation, le moyen d'arrosage 5 comprend un tube capillaire 50 pourvu à son extrémité libre d'un goutteur 51. Le goutteur 51 peut être acheté dans le commerce et la quantité d'eau qu'il laisse passer est réglable en fonction des besoins de la plante.

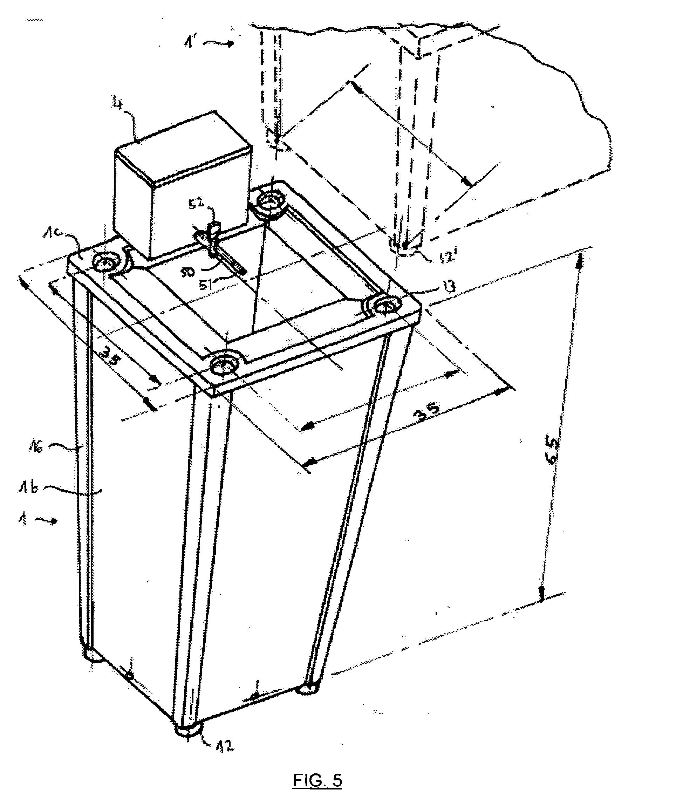

Par ailleurs, la sortie du réservoir additionnel peut être fermée au moyen d'un robinet 52 (illustré par exemple à la figure 5). Le robinet est généralement intégré au goutteur.

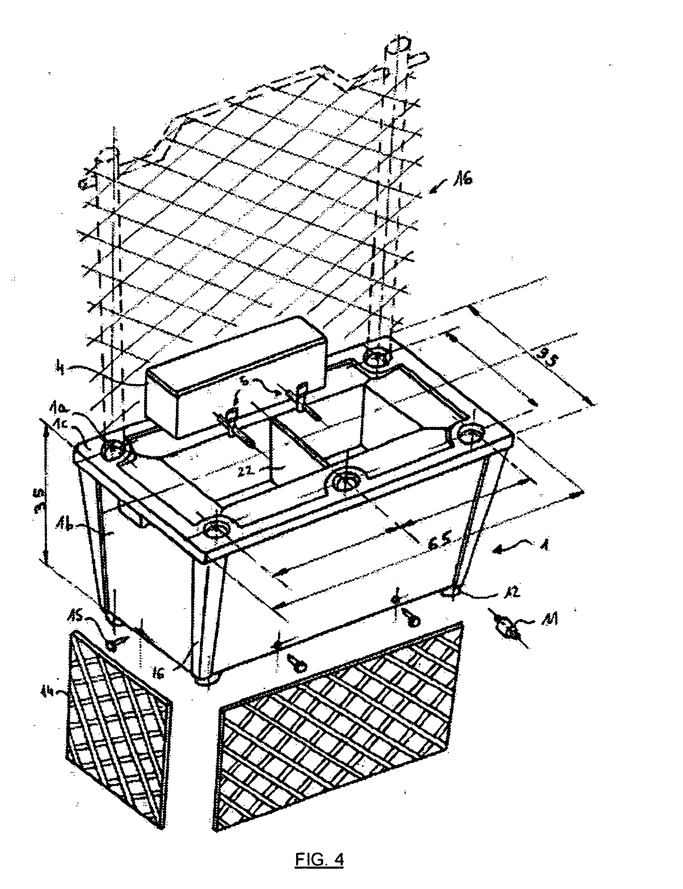

On notera que le nombre de moyens d'arrosage n'est pas limité : en effet, comme sur la figure 4, on peut prévoir plusieurs moyens d'arrosage permettant chacun d'arroser, de manière différenciée, des portions différentes du bac.

De manière alternative, l'un des moyens d'arrosage peut être relié à un capillaire qui alimente également des pots traditionnels disposés à proximité.

Le réservoir additionnel 4 est en relation fluidique avec la réserve d'eau 3.

Plus précisément, il est alimenté en eau de la réserve 3, de préférence au moyen d'une pompe 31 immergée dans la réserve 3. Cette pompe électrique est par exemple du type de celles qui sont utilisées dans les aquariums ou dans les petites fontaines d'animation qui recyclent l'eau en boucle fermée.

Selon une alternative, la pompe peut également être disposée à l'extérieur de la réserve d'eau 3, (la pompe est alors auto-amorçante, et équipée d'un capillaire qui lui, est immergé dans la réserve d'eau) et se présenter par exemple sous la forme d'un module comprenant le réservoir additionnel, la pompe et un dispositif électronique permettant le pilotage de la pompe.

La pompe 31 est alimentée en énergie par tout moyen 32 approprié.

Par exemple, des piles 1,5 volts ou des batteries rechargeables peuvent être disposées dans un logement ménagé à cet effet dans la réserve d'eau, ou dans un logement du réservoir additionnel 4, et reliées à la pompe au moyen d'un fil électrique 44 logé dans une gaine étanche.

Selon une variante particulièrement avantageuse, un capteur solaire peut être disposé sur la réserve d'eau et la pompe peut alors être alimentée par un système de batterie associé à l'énergie solaire.

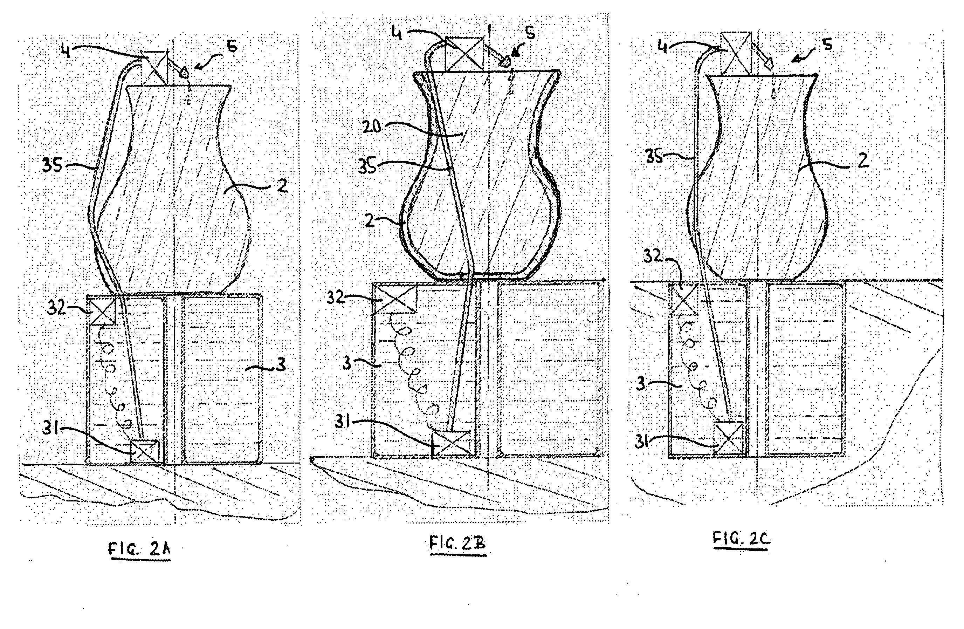

Les figures 2A à 2D illustrent différentes variantes d'agencement de la réserve d'eau 3 par rapport au bac 2 contenant la plante et au réservoir d'eau additionnel 4.

Selon la figure 2A, le bac 2 est posé sur la réserve d'eau 3.

Une pompe 31 est immergée dans la réserve 3 et alimente en eau le réservoir 4 situé au-dessus du bac 2, au moyen d'un capillaire 35.

Dans ce mode de réalisation, le capillaire 35 est extérieur au bac 2 et relie la pompe au réservoir additionnel.

Ce mode de réalisation est particulièrement adapté au cas où l'on dispose d'une plante installée dans un bac que l'on souhaite conserver.

Il suffit alors d'installer ce bac sur une réserve 3 et d'installer le capillaire 35 de manière à ce qu'il soit le moins visible possible (par exemple, en le faisant passer derrière le bac 2).

Selon une variante, illustrée à la figure 2B, le capillaire 35 peut passer à l'intérieur du substrat du bac 2, ce qui rend sa présence encore plus discrète.

Lorsque le bac 2 est installé dans un jardin, la réserve 3 peut être enterrée dans le sol, rendant ainsi la réserve 3 totalement invisible.

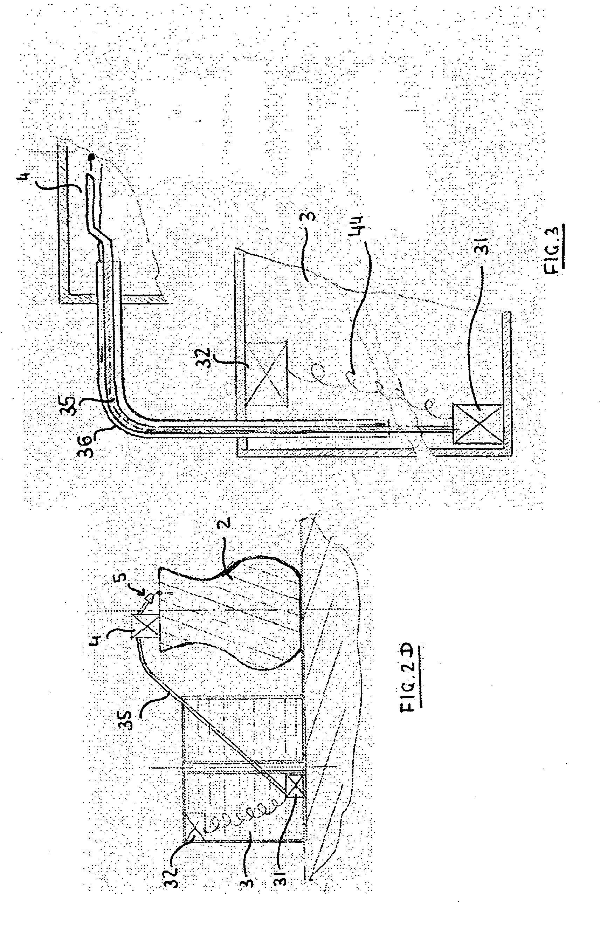

En référence à la figure 2D, la réserve 3 peut être également installée sur le sol, derrière le bac 2.

On comprend donc que l'on peut adopter tout agencement de la réserve 3 par rapport au bac 2, pour autant que l'on installe le réservoir additionnel 4 au-dessus de la surface du substrat.

Le dispositif donne donc une totale liberté d'agencement à l'utilisateur en fonction du lieu où sont installées les plantes (intérieur, cour ou jardin), et de son intention de conserver ou non le bac d'origine des plantes.

La figure 3 illustre de manière détaillée le principe du dispositif de remplissage du réservoir additionnel 4 (ici illustré de façon partielle).

La pompe 31 est immergée dans la réserve d'eau 3 (dont seule une partie est représentée).

Le capillaire 35 qui relie la pompe 31 au réservoir 4 est inséré dans une gaine 36 de diamètre intérieur supérieur au diamètre extérieur du capillaire 35.

L'intervalle compris entre le capillaire 35 et la gaine 36 constitue un dispositif de trop-plein grâce auquel l'eau arrivant en surplus dans le réservoir 4 est évacuée en direction de la réserve 3 (comme indiqué par les flèches).

Pour éviter un phénomène de siphon lors de l'arrêt de la pompe, (par exemple, dans le cas d'une pompe centrifuge), qui renverrait l'eau amenée dans le réservoir additionnel vers la réserve 3, l'orifice de la gaine 36 (trop plein) doit toujours être plus bas de quelques millimètres au moins que l'orifice du capillaire 35 d'alimentation de la fontaine. A cet effet, il convient donc de maintenir l'extrémité du capillaire 35 par un moyen de fixation fiable, au moins 5 mm au dessus de l'extrémité de la gaine 36 de trop plein,

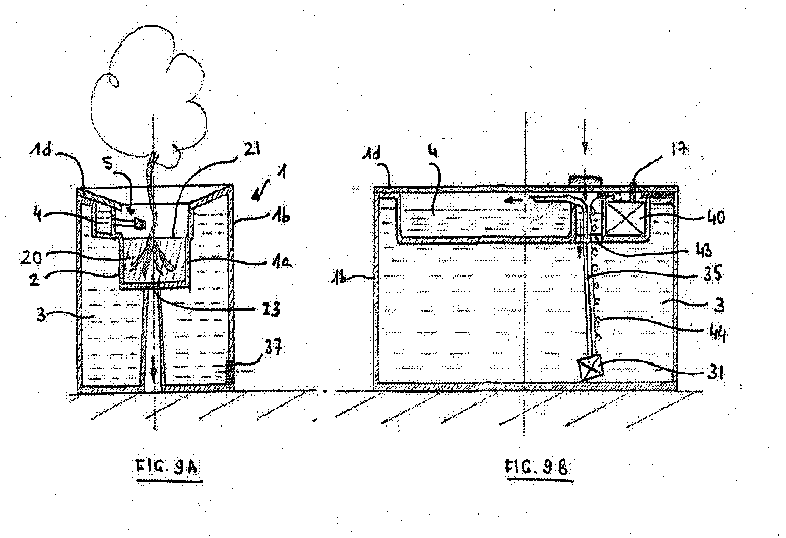

La même contrainte doit être respectée dans la configuration de la figure 9B

### Fonctionnement du dispositif

Comme on l'a expliqué plus haut, la plante est arrosée par un goutte-à-goutte continu à partir de l'eau du réservoir additionnel 4. Elle bénéficie donc du mode d'arrosage le plus bénéfique pour sa croissance, se rapprochant ainsi du principe de la nature, par gravité, la pluie.

Le dispositif est muni d'un interrupteur 17 (non représenté sur la figure 3), qui permet de mettre en fonctionnement le dispositif de commande de la pompe ou son arrêt. Il est possible aussi de couper le contact en débranchant les piles.

Le réservoir d'eau additionnel 4 est rempli périodiquement au moyen de la pompe 31, qui est équipée d'un module électronique 40 particulièrement simple et peu coûteux, pilotant son fonctionnement à intervalles réguliers prédéfinis, par exemple toutes les 6 heures, ou déclenché par un détecteur de niveau d'eau de la fontaine, lui-même relié au module électronique 40 (non représenté sur les figures).

Ainsi, l'invention permet de procurer une réserve d'eau d'un volume important, mais non disposée, comme dans l'art antérieur, au-dessus du bac pour le substrat, ce qui est inesthétique, mais en-dessous, ou à côté, ce qui permet de la rendre plus discrète (assimilée à un support pour le bac de la plante ou éventuellement cachée derrière celui-ci).

Le réservoir d'eau additionnel situé au-dessus de la surface du substrat peut alors être d'un volume faible, ce qui le rend moins visible et plus facile à intégrer au bac du substrat (par exemple simplement posé discrètement sur le substrat).

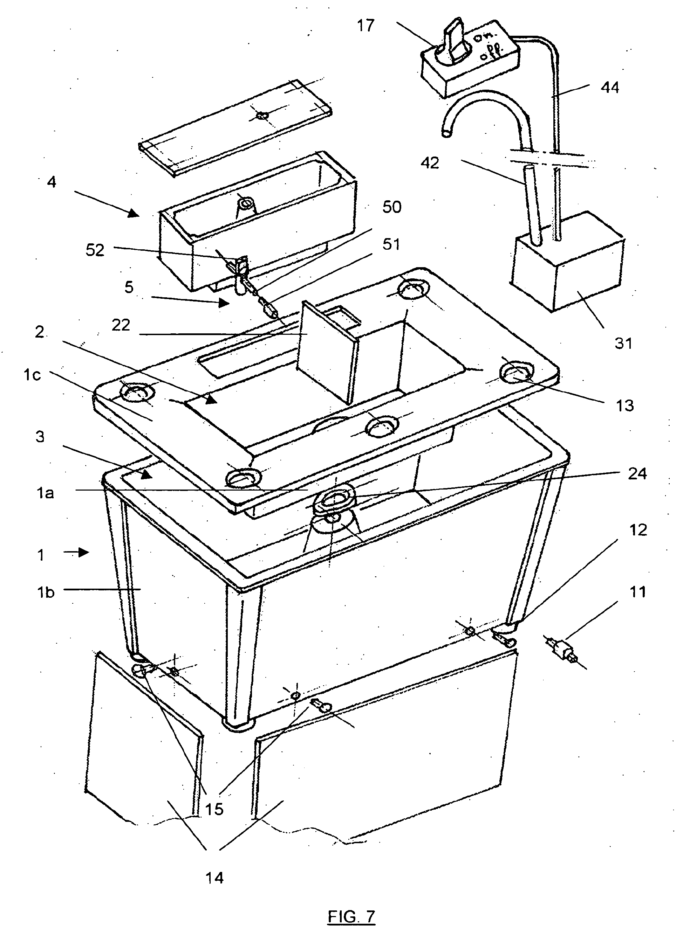

En référence aux figures 4 à 9B, on va maintenant décrire des modes de mise en oeuvre préférés de l'invention, dans lesquels le bac pour le substrat et la réserve d'eau sont intégrés dans un bac principal 1.

### Bac principal

Le bac principal 1 se présente avantageusement sous la forme d'un bac à double paroi :
- une paroi interne 1a définit le volume du bac 2 destiné au substrat de croissance 20 dans lequel pousse une plante ;
- une paroi externe 1 b, dont la face externe définit l'enveloppe extérieure du bac principal.

Le volume compris entre la paroi externe 1b et la paroi interne 1a constitue la réserve d'eau 3.

La paroi interne 1a est étanche, de sorte que le substrat du bac 2 n'est pas en contact avec l'eau de la réserve 3.

Un rebord supérieur 1c sensiblement horizontal relie la paroi externe 1b à la paroi interne 1 a.

Ce rebord comprend au moins un orifice permettant le remplissage de la réserve d'eau 3.

A titre d'exemple, pour l'installation chez des particuliers (salon, terrasse,...), le bac principal peut avoir les dimensions suivantes d'environ 30 à 75 litres d'eau et 4 à 15 litres pour le substrat, ce qui permet d'obtenir une autonomie d'un mois minimum, à raison de 0,5 à 1,5 litre de consommation par jour.

Ce bac à double paroi procure donc un volume important pour une réserve d'eau, ce qui garantit une autonomie nettement supérieure à celle des bacs du commerce.

En outre, la double paroi 1 a, 1 b améliore l'isolation des racines de la plante vis-à-vis des écarts de température ambiante.

Dans le cas d'un bac rectangulaire tel qu'illustré à la figure 4, le bac 2 pour le substrat peut être divisé au moyen en plusieurs portions pouvant recevoir des substrats de nature différente. Cette subdivision peut par exemple être réalisée au moyen d'une cloison 22, par exemple glissée dans des rainures correspondantes prévues sur les parois intérieures du bac 2.

De manière alternative, on peut placer dans le bac 2 vide de substrat un ou plusieurs pots simples (pots de transport) contenant des végétaux (tels que commercialisés en jardinerie ou en pépinière), emboîtés dans le bac, pour autant que leurs dimensions soient adaptées au bac.

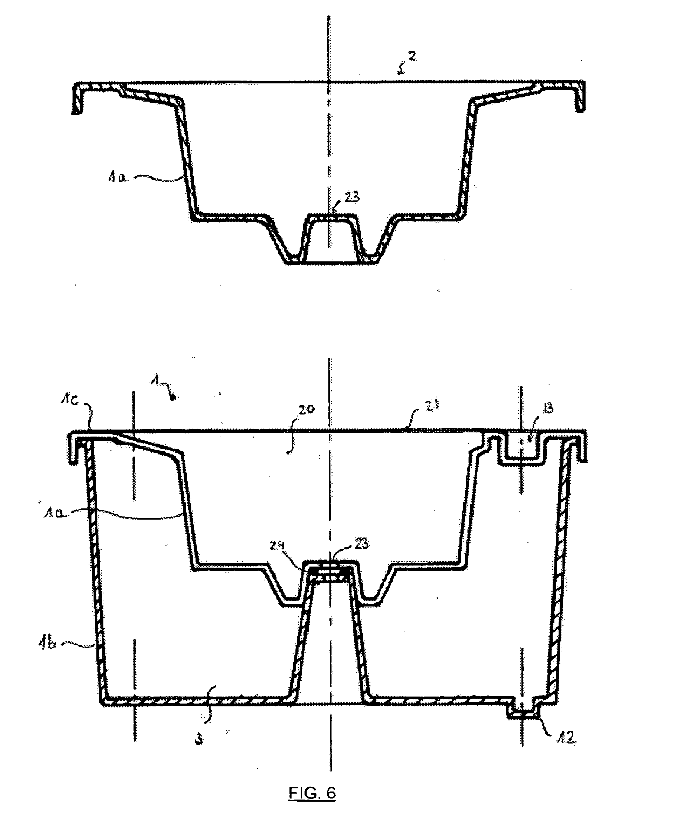

Pour permettre l'évacuation d'un excès d'eau - par exemple dans le cas d'un dispositif installé à l'extérieur et soumis à de fortes averses - il est prévu, au fond du bac 2 pour le substrat, un orifice 23 muni d'une grille permettant de retenir le substrat mais de laisser passer un excès d'eau directement à l'extérieur du bac. L'eau de la réserve 3 est isolée par un joint 24 du substrat du bac 2 (dans le cas ou le bac principal 1 est réalisé en deux parties) Ces détails sont illustrés à la figure 6.

En référence à la figure 9B, la pompe 31 est commandée par un module électronique, lui-même alimenté en énergie par tout moyen approprié. Par exemple, module électronique et piles peuvent être disposés dans un logement étanche 40, ménagé à cet effet dans le rebord du bac principal, ou dans un logement du réservoir additionnel 4, et reliés à la pompe au moyen d'un fil électrique 44 logé dans une gaine étanche.

Selon une variante particulièrement avantageuse, un capteur solaire peut être disposé sur le bac principal et la pompe peut alors être alimentée par un système de batterie associé à l'énergie solaire.

Lorsque le réservoir additionnel 4 est rempli, l'eau éventuellement envoyée par la pompe 31 est évacuée par un dispositif de trop-plein 43, et retombe dans la réserve 3.

### Fabrication du dispositif

Le dispositif conforme à l'invention peut être réalisé en tout matériau approprié au contact avec de l'eau et de la terre.

De manière particulièrement avantageuse, le bac principal 1 et le réservoir additionnel 4 pourront être fabriqués en matériau thermoplastique (par exemple, du polyéthylène ou du polypropylène), qui présente les avantages suivants : faible coût, légèreté, résistance aux chocs, liberté des formes réalisables...

Le bac 1 peut être réalisé en plusieurs pièces, par exemple sous la forme d'un grand bac dont l'enveloppe est définie par la paroi externe 1b, et un petit bac dont l'enveloppe est définie par la paroi interne 1 a, et muni d'un rebord périphérique 1c lui permettant d'être posé sur le bord du grand bac.

Toutefois, le bac principal à double paroi peut être avantageusement fabriqué en une seule pièce, par un procédé adéquat tel que le soufflage ou le rotomoulage.

Ces procédés présentent l'avantage de nécessiter des moules relativement peu coûteux, et de permettre la réalisation de pièces relativement volumineuses.

Dans ce cas, l'épaisseur des parois est de l'ordre de 3mm à 5 mm.

Le bac 1 peut être utilisé tel qu'issu de moulage, nécessitant simplement le perçage d'au moins un orifice permettant l'insertion de la pompe dans la réserve 3 et d'un orifice permettant le remplissage de la réserve.

Il est également possible de couper le bac principal 1 sous le rebord supérieur, pour dissocier la réserve d'eau et le bac pour le substrat, ce qui permet d'accéder plus facilement à l'intérieur de la réserve.

De manière particulièrement avantageuse, si l'on met en oeuvre un procédé de rotomoulage ou de soufflage, on peut fabriquer le réservoir d'eau additionnel avec le bac principal puis le découper pour le disposer dans sa position d'utilisation. On minimise ainsi le nombre de moules et d'opérations de moulage.

Dans le cas où l'on fabrique le bac en deux parties, on peut utiliser un procédé d'injection.

Selon un mode particulier de réalisation, illustré à la figure 6, la réserve 3 présente dans sa partie centrale un bossage sur lequel vient s'appuyer la face inférieure du bac 2, ce qui permet de rigidifier la structure et de centrer les deux éléments.

Lorsque le bac 2 est rapporté sur la réserve 3, on dispose un joint torique 24 entre les deux pièces de manière à éviter que de l'eau de la réserve ne fuie par l'interstice et ne remonte dans le substrat 20 par l'orifice 23.

De manière optimale, il est possible de fabriquer en une seule opération de rotomoulage ou de soufflage l'ensemble du bac tel qu'illustré aux figures 9A et 9B. On minimise alors les opérations de reprise puisqu'il suffit de fermer le sommet du réservoir additionnel 4 par un couvercle 1d rapporté.

### Peaux d'aspects

Une autre caractéristique originale du dispositif de l'invention est que le bac principal peut recevoir, sur un ou plusieurs de ses côtés, des peaux d'aspect 14 de couleurs et textures variées.

Ces peaux d'aspect se présentent typiquement sous la forme de plaques planes ou galbées, dont la longueur et la largeur sont légèrement inférieures à celles des côtés du bac principal. Ces plaques peuvent être elles mêmes les peaux d'aspect avec une texture et une couleur intégrée. Elles peuvent être réalisées en différentes matières (plastique, métal, terre cuite, ......). Ces plaques peuvent être aussi de simples plaques support, sur lesquelles il est possible par exemple d'y coller ou d'y rapporter par tout autre moyen de liaison (surmoulage, soudure, clipsage, vissage, ....), du papier peint, des cannisses en bois, des peintures, des galets...

Ainsi, le bac peut être décoré selon le goût de l'utilisateur et contribuer en tant que tel au décor.

A cet effet, le bac principal comporte, sur sa paroi externe, des moyens de fixation des peaux d'aspect.

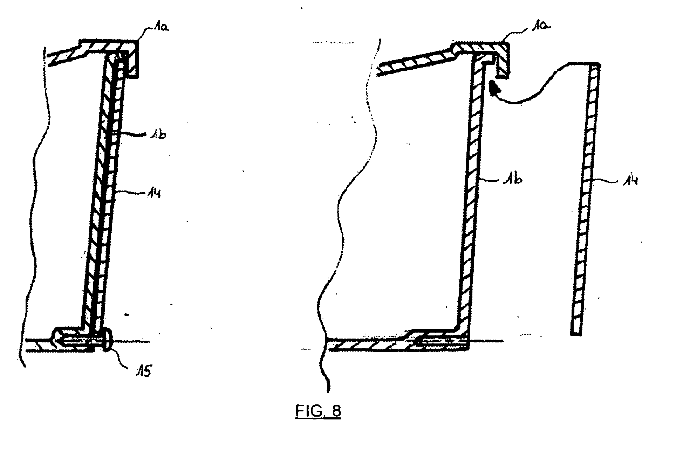

Par exemple, comme illustré à la figure 8, les peaux d'aspect présentent un bord supérieur qui peut s'emboîter sous un rebord prévu à cet effet sur le bac principal.

Après emboîtement de leur bord supérieur sous le rebord, les peaux d'aspect peuvent être solidarisées au bac, dans leur partie inférieure, par exemple au moyen de vis 15 ou tout autre moyen de fixation amovible.

Afin de garantir un accostage esthétique des peaux d'aspects sur les différents côtés du bac, celui-ci présente, sur chacune de ses arêtes verticales, un décalage ou un bourrelet qui pourrait s'assimiler à une colonne, constituant, par rapport à la paroi, un relief correspondant sensiblement à l'épaisseur de la peau d'aspect.

### Accessoires

Le fond du bac 1 peut avantageusement être pourvu de roulettes 11, qui permettent de le déplacer plus facilement. De plus, sur au moins deux parois du bac principal, en partie supérieure, des poignées peuvent être aménagées rapportées ou intégrées, pour déplacer le bac.

Comme illustré sur la figure 4, le bac 1 peut aussi être équipé d'une palissade 16 qui permet de faire pousser des plantes grimpantes.

Dans ce cas, la palissade 16 sera par exemple également réalisée en matière plastique ou en bois, avec des montants dont la base est filetée, et apte à être vissée dans des orifices taraudés situés sur l'un des rebords horizontaux du bac principal 1.

Le fond du bac principal peut également comprendre des formes emboîtables sur le rebord supérieur du bac, ou des plots 12 en saillie par rapport au fond, constituant des pieds - de préférence au nombre de quatre ; le rebord supérieur 1c comprend alors des logements 13 aptes à recevoir des plots 12' d'un deuxième bac 1' similaire au bac 1. Par similaire, on entend ici un bac de conception semblable à celle du bac principal 1, dont les dimensions peuvent éventuellement être différentes de celle du bac 1, dans la mesure où l'entraxe des plots 12' est identique à celui des logements 13 pour permettre l'emboîtement.

En référence à la figure 5, on peut alors agencer une pluralité de bacs 1, 1' en les superposant en quinconce. Ce type d'agencement est particulièrement intéressant pour meubler de grands volumes (murs de végétaux), tels que des terrasses ou pour diviser des bureaux paysagés par exemple.

Le bac peut être équipé d'un moyen d'indication du niveau d'eau dans la réserve 3. Il peut s'agir, de manière classique, d'une portion transparente de la paroi externe du bac, qui permet un contrôle visuel du niveau d'eau dans la réserve.

Il est également possible d'intégrer, dans le module d'alimentation électronique du goutte à goutte, l'allumage d'une diode électroluminescente ou le déclenchement d'un avertisseur sonore lorsque le niveau est inférieur à un seuil déterminé.

En effet, lorsque le module électronique détecte un manque d'eau par l'intermédiaire de la pompe, ou d'un capteur additionnel, par exemple, l'avertisseur sonore (buzzer), peut se mettre en action, et stopper aussi le fonctionnement de la pompe pour ne pas risquer de l'endommager par manque d'eau dans le bac principal.

### Conclusion : avantages de l'ensemble conforme à l'invention

Les avantages majeurs qui résultent de l'arrosage en continu par goutte-à-goutte se situent au niveau de la santé du végétal, qui est nettement améliorée, ainsi que de la réduction de la consommation en eau, de la réduction du volume de substrat, de l'éradication des larves de moustiques (pas d'eau stagnante en contact avec l'air ambiant), et de la diminution des traitements phytosanitaires, nocifs pour l'être humain.

D'autres particularités avantageuses de l'invention sont :
- l'utilisation d'un système électronique simplifié pour commander la pompe, ce qui permet d'en réduire le coût tout en améliorant les fonctionnalités supplémentaires telles que par exemple, le mode de détection du niveau d'eau ;
- la suppression du risque d'inondation des arrosages automatiques actuels branchés sur le réseau d'eau.
- la possibilité d'obtenir un ensemble intégré, peu encombrant et donc plus facile à rendre esthétique, sans fils électriques ni tuyaux d'eau apparents, ainsi qu'une modularité sans fin de décors en fonction des goûts des utilisateurs, faciles à poser et à démonter, en conservant le même dispositif pour la culture du ou des végétaux.

## Revendications

1. Ensemble pour la culture de végétaux, comprenant un bac (2) pour un substrat (20) de croissance d'une plante et une première réserve d'eau (3), **caractérisé en ce qu'**il comprend un réservoir d'eau additionnel (4) de capacité inferieure par rapport à la premiere réserve d'eau (3) situé au-dessus de la surface supérieure (21) du substrat (20), en liaison fluidique avec la première réserve d'eau (3) et pourvue d'un moyen pour convoyer l'eau, et un moyen (5) d'arrosage de manière continue par gravité de la surface supérieure (21) du substrat à partir dudit réservoir additionnel (4).

2. Ensemble selon la revendication 1, **caractérisé en ce que** le réservoir d'eau additionnel (4) est alimenté en eau de la premiere réserve (3) par une pompe (31).

3. Ensemble selon la revendication 2, **caractérisé en ce que** la pompe (31) est immergée dans la premiere réserve (3) ou est une pompe non immergée auto-amorçante, avec un capillaire immergé dans la réserve (3).

4. Ensemble selon l'une des revendications 2 ou 3, **caractérisé en ce qu'**il comprend un moyen de commande (40) de la pompe (31) apte à commander le fonctionnement de la pompe à des instants déterminés.

5. Ensemble selon la revendication 1 , **caractérisé en ce que** le moyen d'arrosage (5) comprend un goutteur (51), de sorte que la plante est arrosée par un goutte-à-goutte permanent.

6. Ensemble selon la revendication 1 , **caractérisé en ce qu'**il comprend un moyen d'indication du niveau de l'eau dans la première réserve (3).

7. Ensemble selon la revendication 1 , **caractérisé en ce qu'**il comprend un bac principal (1) à double paroi (1a, 1b), dans lequel :
- le bac (2) pour le substrat est le volume défini par la paroi interne (1a) du bac principal (1)
- la premiere réserve d'eau (3) est le volume compris entre la paroi interne (1a) et la paroi externe (1b) du bac principal (1).

8. Ensemble selon la revendication 7, **caractérisé en ce que** la paroi interne (1a) est étanche, de sorte que le bac (2) contenant le substrat est étanche vis-à-vis de la premiere réserve d'eau (3).

9. Ensemble selon l'une des revendications 7 ou 8, **caractérisé en ce que** le bac principal (1) comprend sur sa face externe au moins une peau d'aspect (14), interchangeable, permettant ainsi d'obtenir un ensemble esthétique modulaire global

10. Ensemble selon l'une des revendications 7 à 9, **caractérisé en ce que** le fond du bac principal (1) comprend sur sa face externe des plots (12) et **en ce que** le rebord supérieur (1c) du bac principal (1) comprend des logements (13) aptes à recevoir des plots (12') d'un deuxième bac (1') similaire audit bac (1).

## Claims

1. Plant cultivation assembly, comprising a tray (2) for a plant growth substrate (20) and a first water reserve (3), **characterised in that** it comprises an additional water tank (4), having a lower capacity than the first reserve, situated above the top surface (21) of the substrate (20), connected by fluidic means to the first water reserve (3), and provided with means for conveying water, and means (5) for the continuous gravitational watering of the plant from said additional tank (4).

2. Assembly according to claim 1, **characterised in that** the additional water tank (4) is supplied with water from the first reserve (3) by a pump (31).

3. Assembly according to claim 2, **characterised in that** the pump (31) is immersed in the first reserve (3) or is a self-priming non-immersed pump, with a capillary tube immersed in the reserve (3).

4. Assembly according to any of claims 2 or 3, **characterised in that** it comprises means (40) for controlling the pump (31) suitable for controlling the operation of the pump at predetermined times.

5. Assembly according to claim 1, **characterised in that** the watering means (5) comprises a drip-feed system (51), such that the plant is continuously watered drip-by-drip.

6. Assembly according to claim 1, **characterised in that** it comprises means for indicating the water level in the first reserve (3).

7. Assembly according to claim 1, **characterised in that** it comprises a main tray (1) with double walls (1 a, 1 b), wherein:
- the tray (2) for the substrate is the volume defined by the inner wall (1a) of the main tray (1)
- the first water reserve (3) is the volume between the inner wall (1a) and the outer wall (1 b) of the main tray (1).

8. Assembly according to claim 7, **characterised in that** the inner wall (1a) is tight, such that the tray (2) containing the substrate is tight with respect to the first water reserve (3).

9. Assembly according to any of claims 7 or 8, **characterised in that** the main tray (1) comprises on the outer face thereof at least one interchangeable visual coating (14), making it possible to obtain a modular overall design.

10. Assembly according to any of claims 7 to 9, **characterised in that** the base of the main tray (1) comprises on the outer face thereof studs (12) and **in that** the top rim (1c) of the main tray (1) comprises recesses (13) suitable for receiving studs (12') from a second tray (1') similar to said tray (1).

## Patentansprüche

1. Einheit zum Züchten von Pflanzen mit einem Behälter (2) für ein Wachstumssubstrat (20) einer Pflanze und einem ersten Wasservorratstank (3), **dadurch gekennzeichnet, dass** sie einen zusätzlichen Wasservorratstank (4) mit einem geringeren Fassungsvermögen als der erste Vorratstank enthält, der oberhalb der Oberfläche (21) des Substrats (20) in Strömungsverbindung mit dem ersten Wasservorratstank (3) angeordnet und mit einer Vorrichtung zum Befördern des Wasser ausgestattet ist, sowie mit einer Vorrichtung (5) zum ununterbrochenen Gießen der Pflanze durch die Schwerkraft ausgehend vom besagten zusätzlichen Wasservorratstank (4).

2. Einheit nach Anspruch 1, **dadurch gekennzeichnet, dass** der zusätzliche Wasservorratstank (4) vom ersten Vorratstank (3) über eine Pumpe (31) mit Wasser versorgt wird.

3. Einheit nach Anspruch 2, **dadurch gekennzeichnet, dass** die Pumpe (31) in den ersten Vorratstank (3) eingetaucht ist oder eine nicht eingetauchte selbstansaugende Pumpe mit einer Kapillare ist, die in den Vorratstank (3) eingetaucht wird.

4. Einheit nach einem der Ansprüche 2 oder 3, **dadurch gekennzeichnet, dass** sie eine Steuervorrichtung (40) für die Pumpe (31) enthält, die in der Lage ist, den Betrieb der Pumpe zu bestimmten Zeitpunkten anzusteuern.

5. Einheit nach Anspruch 1, **dadurch gekennzeichnet, dass** die Gießvorrichtung (5) einen Tropfer (51) enthält, sodass die Pflanze durch eine permanente Tröpfchenbewässerung gegossen wird.

6. Einheit nach Anspruch 1, **dadurch gekennzeichnet, dass** sie eine Vorrichtung zur Anzeige des Wasserstandes im ersten Wasservorratstank (3) enthält.

7. Einheit nach Anspruch 1, **dadurch gekennzeichnet, dass** sie einen Hauptbehälter (1) mit einer Doppelwand (1 a, 1 b) enthält, in dem:
- der Behälter (2) für das Substrat dem Volumen entspricht, das von der Innenwand (1a) des Hauptbehälters (1) gebildet wird
- der erste Wasservorratstank (3) dem Volumen entspricht, das zwischen der Innenwand (1a) und der Außenwand (1b) des Hauptbehälters (1) enthalten ist.

8. Einheit nach Anspruch 7, **dadurch gekennzeichnet, dass** die Innenwand (1a) dicht ist, sodass der Behälter (2), in dem das Substrat enthalten ist, gegenüber dem ersten Wasservorratstank (3) abgedichtet wird.

9. Einheit nach einem der Ansprüche 7 oder 8, **dadurch gekennzeichnet, dass** der Hauptbehälter (1) an seiner Außenseite zumindest eine auswechselbare Hülle in einer Erscheinungsform (14) enthält, anhand derer man eine globale modulare ästhetische Einheit erhalten kann.

10. Einheit nach einem der Ansprüche 7 bis 9, **dadurch gekennzeichnet, dass** der Boden des Hauptbehälters (1) an seiner Außenseite Stifte (12) enthält, und **dadurch**, dass der obere Rand (1c) des Hauptbehälters (1) Aufnahmen (13) enthält, die in der Lage sind, die Stifte (12') eines zweiten Behälters (1') aufzunehmen, der dem besagten Behälter (1) ähnelt.
